# EUROPÄISCHE PATENTANMELDUNG

(11) **EP 1 180 751 A1**
(43) Veröffentlichungstag der Anmeldung: **20.02.2002**
(21) Anmeldenummer: 00117856.5
(22) Anmeldetag: 18.08.2000
(51) Int. Cl.: G07F 7/10, G07F 19/00

(54) **Verfahren und Anordnung zur Übertragung eines elektronischen Geldbetrages aus einem Guthabenspeicher**

(71) Anmelder: SIEMENS AKTIENGESELLSCHAFT, 80333 München (DE)
(72) Erfinder: Oppat, Joerg, 13465 Berlin (DE); Wolf, Hans-Hermann, 81829 München (DE)

(57) **Zusammenfassung**

Verfahren zur Übertragung eines elektronischen Geldbetrages aus einem Guthabenspeicher eines Geldsenders auf ein Konto bzw. in einen Guthabenspeicher eines Geldempfängers über ein intelligentes Netz in Echtzeit mittels Nutzer-Dienst-Signalisierung.

## Beschreibung

Die Erfindung betrifft ein Verfahren sowie eine Anordnung zur Übertragung eines elektronischen Geldbetrages aus einem Guthabenspeicher auf ein Konto bzw. in einen anderen Guthabenspeicher über ein intelligentes Netz, insbesondere Mobilfunknetz.

Das Internet gewinnt - neben der Nutzung als Kommunikationsmittel und Informationsquelle für mittlerweile Hunderte von Millionen Menschen - zunehmend an Bedeutung als Einkaufsquelle. Insbesondere der Handel mit Software, Büchern und Reisen läuft heute bereits zu einem nennenswerten Anteil im Internet ab, zunehmend wird aber auch ein breites Spektrum sonstiger Waren und Dienstleistungen über das Internet bestellt und bezahlt. Die Bezahlung der entsprechenden Leistungen im Internet auf die ursprünglich etablierte und heute noch meist verbreitete Weise erfordert die jeweils gesonderte Eingabe der relevanten Datensätze zumindest bei jedem Geschäftspartner, wenn nicht sogar für die einzelne Transaktion. Diese Zahlungsweise gibt damit dem Geschäftspartner Einblick in sensible persönliche Daten und sogar die Möglichkeit ihrer dauerhaften Speicherung.

Auch für die Abwicklung sonstiger Zahlungsvorgänge im geschäftlichen wie im privaten Bereich hat das Internet inzwischen erhebliche Bedeutung erlangt. Nahezu alle Banken in den Industrieländern bieten als "Electronic Banking" die elektronische Abwicklung der Kontoführung und von Zahlungsvorgängen an.

Gleichwohl erfolgt die Mehrzahl der Zahlungsvorgänge des täglichen Lebens auch heute noch per Bargeld oder durch schriftliche Erteilung von Überweisungs- oder Einzugsaufträgen o. ä. oder bei Kredit- bzw. Scheckkarte. Auf speziellen Gebieten, etwa dem der Mobilfunktechnik, haben auch elektronische Guthaben (sog. "Prepaid-Karten") Bedeutung erlangt, einer breiten Einführung dieses Zahlungsmittels stehen aber erhebliche Hindernisse im Wege.

Insgesamt ist festzustellen, daß beim derzeitigen Stand der Entwicklung eine höchst unübersichtliche Vielzahl von Möglichkeiten der Bezahlung von Waren oder Dienstleistungen besteht, deren Handhabung im täglichen Leben erhebliche Aufmerksamkeit und den Umgang mit den verschiedensten Medien bzw. Eingabemodi erfordert. Das ist lästig und zudem mit vielfältigen Sicherheitsrisiken (Verlust von Daten- bzw. Guthabenträgern, Vergessen von Kontendaten bzw. Authentisierungscodes etc.) verbunden.

Neben dem Internet stellt die Telekommunikation - insbesondere die mobile Telekommunikation - heute ein Gebiet mit rasanter technischer und wirtschaftlicher Entwicklung und eine wesentliche Quelle wirtschaftlichen Wachstums und neuer sozialer Entwicklungen dar. Für einen Großteil der Menschen in den Industrieländern wird das Mobiltelefon ("Handy") mehr und mehr zu einem universellen Kommunikations- und Informations-instrument und auch zunehmend für den Zugriff auf Waren und Dienstleistungen genutzt. Auch diese Entwicklung wird noch durch unzureichende Möglichkeiten für eine sichere und zugleich einfache Bezahlung von über das Handy bestellten Informationen, Waren und Dienstleistungen behindert.

Zwar gibt es Lösungen, die dem Nutzer eines Handys - mit oder ohne Prepaid-Karte - die Autorisierung von Zahlungen ermöglichen, welche anschließend auf an sich konventielle Weise per Lastschriftverfahren oder Kreditkarten-Abbuchung abgewickelt werden. Diese Verfahren setzen jedoch, wie auch die im Internet inzwischen eingebürgerten Zahlungsabwicklungen, die Kreditwürdigkeit des Käufers und die Verfügungsbefugnis über eine Kreditkarte oder ein Girokonto mit Dispositionskredit voraus. Zudem wohnen diesen Verfahren zeitliche Verschiebungen inne, die sich nachteilig auf die Transparenz und Zuverlässigkeit der Gesamtabwicklung auswirken.

Der Erfindung liegt daher die Aufgabe zugrunde, ein Verfahren und eine Anordnung zur vereinfachten Abwicklung von Zahlungsverkehr unter Nutzung eines Datennetzes anzugeben.

Diese Aufgabe wird hinsichtlich ihres Verfahrensaspektes gelöst durch ein Verfahren mit den Merkmalen des Anspruchs 1 und hinsichtlich ihres Vorrichtungsaspektes durch eine Anordnung mit den Merkmalen des Anspruchs 12.

Die Erfindung schließt den wesentlichen Gedanken ein, ein weitgehend universelles Zahlungsverfahren auf der Grundlage eines elektronischen Guthabens (Prepaid-Konto bzw. -Karte) anzugeben, welches für eine Zahlungsabwicklung im sogenannten B2C(Business-2-Consumer)-Bereich wie auch im C2C(Consumer-2-Consumer)-Bereich anwendbar ist, also sowohl den Einkauf in realen und virtuellen Geschäften, die Bezahlung in gastronomischen oder kulturellen Einrichtungen etc. als auch die "Übersendung" von Geldbeträgen im privaten Bereich ermöglicht. Sie schließt weiter den Gedanken ein, hierzu die Möglichkeiten eines intelligenten Netzes zu nutzen, und zwar insbesondere die Möglichkeit einer Abwicklung in Echtzeit (Real Time).

Unter einem elektronischen Guthaben wird hier ein Speicherinhalt eines über ein Telekommunikations- bzw. Datennetz zur Durchführung von Zahlungsverkehr handhabbaren Guthabenspeichers verstanden - grundsätzlich unabhängig davon, ob der Speicher tatsächlich ein vorausbezahltes Guthaben aufweist oder ein Guthabenbetrag erst zu einem späteren Zeitpunkt transferiert wird. In der nachfolgenden Beschreibung und den Patentansprüchen wird der Inhaber des Prepaid-Guthabens, der einen Geldbetrag übertragen möchte und in einem (realen oder virtuellen) Geschäft als Käufer und in einer gastronomischen Einrichtung als Gast in Erscheinung tritt, allgemein als "Geldsender" bezeichnet. Der Empfänger des zu übertragenden Geldbetrages, bei dem es sich im täglichen Leben zumeist um den Inhaber bzw. Betreiber eines Geschäftes oder einer gastronomischen oder kulturellen Einrichtung o. ä. handeln wird, wird nachfolgend allgemein "Geldempfänger" bezeichnet. Geldempfänger und Geldsender können im übrigen auch Applikationen sein.

Kernstück der vorgeschlagenen Anordnung und des vorgeschlagenen Verfahrens ist ein Transaktions-Server, der auf eine Transaktions-Datenbasis zugreift, in der die für eine Übertragung von Prepaid-Guthaben relevanten Daten gespeichert sind. Initiiert wird der Übertragungsvorgang durch eine Nutzer-an-Dienst-Signalisierung (USS = User-to-Service-Signaling).

Der zu übertragende Geldbetrag wird seitens des Geldsenders oder -empfängers an dessen jeweiligem Endgerät oder einem damit verbundenen Gerät, insbesondere einer Kasse, eingegeben. Dies kann auch in der zweiten Phase eines Ablaufes geschehen, bei dem zunächst per USS der Übertragungs-Dienst angesprochen und dann der Geldsender oder -empfänger über eine Ansage oder Menüführung aufgefordert wird, den Geldbetrag einzugeben. Auf diese Aufforderung hin nimmt er dann die relevante Eingabe vor.

Bevorzugt ist aber die Eingabe eines zusammenhängenden USSD (Unstructured Supplementary Service Data)-String am jeweiligen Endgerät, der neben einem USSD-Code für Prepaid-Zahlungen eine spezifizierte Prepaid-Rufnummer des jeweiligen Übertragungspartners - d. h. bei Eingabe durch den Geldsender die Rufnummer des Geldempfängers und umgekehrt - sowie (zweckmäßigerweise durch einen Stern abgetrennt) den zu übertragenden Geldbetrag umfaßt. Der USSD-Code für Prepaid-Zahlungen ist eine vorbestimmte Folge aus Ziffern und Zeichen (z. B. *94#).

Über einen sogenannten Originating-Trigger im Switch des jeweiligen Anrufers (Geldempfänger oder Geldsender) wird der USSD-String als solcher erkannt und von der Vermittlungsstelle (Switch) über ein adäquates Protokoll zu dem Transaktions-Server übermittelt, der bei Empfang des Strings die angeforderte Anwendung, nämlich den Geldübertragungs-Dienst, startet. Im Rahmen der Übertragung wird insbesondere unter Zugriff auf die Transaktions-Datenbasis (oder ggf. auch eine andere Nutzer-Datenbasis des intelligenten Netzes, beispielsweise das HLR = Home Location Register eines Mobilfunknetzes) eine Überprüfung der Rufnummer vorgenommen, von der der Anruf ausgeht. Die Anwendung wird nur gestartet, wenn der Anruf von einem eingetragenen Nutzer des Dienstes ausgeht. Als Übertragungsprotokoll dient bei Realisierung der Erfindung in einem Mobilfunknetz insbesondere das MAP(Mobile Application Part)-Protokoll, das eine mobilnetzspezifische Erweiterung des bekannten Signalisierungssystems Nr. 7 darstellt.

Die Nutzung dieser Anwendung erfolgt vorzugsweise im Rahmen einer Subskription durch den Geldempfänger. Hierbei wird der Geldempfänger im Normalfall ein Bankkonto angeben, auf das das im Rahmen der Prepaid-Shopping-Anwendung in seinen elektronischen Guthabenspeicher übertragene Geld letztlich transferiert wird. Weiterhin kann die Transaktions-Währung spezifiziert werden. Für den Geldsender besteht keine Notwendigkeit, sich für das Geldübertragungsverfahren zu subskribieren. Aus Sicherheitsgründen ist jedoch bevorzugt die Autorisierung der Geldübertragung unter Nutzung vorbestimmter Authentisierungsmittel vorgesehen; siehe dazu weiter unten.

Die bevorzugte Subskription des Dienstes durch den Geldempfänger ist ebenfalls nicht zwingend notwendig. Ohne formelle Subskription kann allerdings keine Bankverbindung angegeben werden, so daß der in den elektronischen Guthabenspeicher ("Prepaid-Konto") übertragene Geldbetrag nicht weiter transferiert werden kann. Da zudem keine Währung angegeben werden kann, beschränkt sich die Anwendung im Normalfall auf die im Land des Geldsenders oder -empfängers gültige Währung. In dieser Ausgestaltung eignet sich das Verfahren insbesondere für den Geldtransfer zwischen Privatleuten ("C2C").

Nach Herstellung der Verbindung bzw. Verbindungen zum Transaktions-Server über USS können die weiter erforderlichen Ein-und Ausgaben über USSD, über eine Sprachverbindung mit Spracheingabe oder DTMF-Eingabe und Sprachausgabe oder über den Austausch von Textnachrichten (insbesondere SMS oder E-Mail) oder über das WAP (Wireless Application Protocol) oder auch mittels einer Kombination aus diesen oder unter Einsatz eines künftig verwendeten Internet-Protokolls vorgenommen werden.

Mit dem oben erwähnten Subskriptionsvorgang wird ein den Geldempfänger betreffender Datensatz in der Transaktions-Datenbasis ("Shopping-Datenbank") abgelegt. Das Konto des Geldempfängers muß zur Verwaltung elektronischer Guthaben geeignet sein; es kann sich hierbei insbesondere ebenfalls um ein Prepaid-Konto handeln. Der Geldempfänger kann mehrere Telefonnummern und auch mehrere Zielkonten für die Geldübertragung benutzen, wobei in diesem Fall natürlich alle einzusetzenden Telefonnummern und Konto-Identifikatoren aller Konten in der Shopping-Datenbank zu hinterlegen sind. (Mit dem Begriff "Konto-Iden-tifikator" wird nachfolgend die Gesamtheit aus einer Kontonummer bzw. einem Kontencode und der gegebenenfalls benötigten Server-Adresse eines externen Servers verstanden, auf dem das Konto verwaltet wird.) Neben den erwähnten Daten umfaßt der in der Transaktions-Datenbasis gespeicherte Geldempfänger-Datensatz zweckmäßigerweise auch einen Namen bzw. Firmennamen.

Neben den Informationen zum Geldempfänger enthält die Shopping-Datenbank bevorzugt auch die zur Durchführung der Geldübertragung erforderlichen Informationen bezüglich des Geldsenders. Dieser Geldsender-Datensatz enthält zweckmäßigerweise die Kontonummer seines Prepaid-Kontos und erforderlichenfalls die Serveradresse eines externen Servers, auf dem das Prepaid-Guthaben verwaltet wird (auch hier nachfolgend gelegentlich als "Konto-Identifikator" bezeichnet), vorteilhafterweise auch den Server- und Betreibernamen und schließlich einen Authentisierungsdatensatz zur mindestens optionalen fallweisen Authentisierung größerer Geldtransfers. Als "Adresse" bzw. "Schlüssel" für diesen Datensatz dient zweckmäßigerweise die Geldsender-Rufnummer.

Der Geldsender-Datensatz kann auch in einer separaten Prepaid-Datenbasis hinterlegt sein.

Eine wesentliche Sicherheitskomponente stellt der bereits erwähnte Authentisierungsdatensatz innerhalb des Geldsender-Datensatzes dar. Dieser umfaßt insbesondere einen Authentisierungscode (PIN o. ä.) und/oder biometrische Daten des Geldsenders (z. B. Papillarlinien- oder Retinamuster), der bzw. die zur fallweisen Autorisierung von Geldübertragungen genutzt werden. Dieser Code bzw. diese Daten werden am Endgerät des Geldsenders oder an einem diesem zugeordneten Eingabegerät eingegeben, zum Transaktions-Server übermittelt und dort mit den entsprechenden hinterlegten Daten verglichen. Im Ergebnis des Vergleiches wird die Transaktion freigegeben oder gesperrt. Die Eingabe der PIN bzw. biometrischen Daten des Geldsenders kann auch an einer mit dem Endgerät des Geldempfängers verbundenen Kasseneinrichtung bzw. einem zugeordneten Eingabegerät erfolgen.

Ist die Authentisierung des Geldsenders nicht schon zu Beginn des Geldübertragungsvorganges auf diese Weise geschehen, müssen die Authentisierungsdaten erfragt werden. Dies kann in einer ersten Ausführungsform durch einen Anruf auf dem Endgerät des Geldsenders und die Übermittlung einer Ansage geschehen, mit der der zu betätigende Geldbetrag genannt und der Geldsender zur Bestätigung mit dem vereinbarten Authentisierungsdatensatz (PIN, biometrische Daten o. ä.) aufgefordert wird. Zweitens kann an den Geldsender per USSD oder SMS eine geeignet formulierte Anfrage und dem zu bestätigenden Geldbetrag gesandt werden, und der Geldsender antwortet mit USSD oder einer SMS, die die PIN oder andere Authentisierungsdaten beinhaltet. Die dritte Möglichkeit besteht darin, daß die PIN o. ä. über eine WAP-Push-Seite unter Nennung des zu bestätigenden Geldbetrages vom Geldsender abgefragt wird.

Die erwähnten Autorisierungsschritte werden in einer bevorzugten Verfahrensdurchführung bei Kleinstbeträgen nicht ausgeführt, sondern nur bei einen vorbestimmten Schwellwert übersteigenden Geldbeträgen. Dieser Schwellwert ist vorteilhafterweise durch den Dienstbetreiber oder den Geldsender selbst einstell- bzw. änderbar.

Die vorgeschlagene Lösung umfaßt die Funktionsblöcke (1) Start des Geldübertragungsverfahrens, (2) Abbuchung beim Geldsender und (3) Aufbuchung beim Geldempfänger. Diese Funktionsblöcke können auf ein und demselben oder verschiedenen Servern ablaufen, für den bzw. die zusammenfassend der Begriff "Transaktions-Server" steht. Der oder die Server kann bzw. können zentral bei einem Dienstbetreiber oder in mehreren Hardware-Implementierungen bei diesem oder auch bei mehreren Dienstbetreibern existieren. Die Prepaid-Shopping-Anwendung hat - wie oben bereits erwähnt - Zugriff auf eine "Shopping-Datenbank", die (je nach konkretem Netz- und Anwendungskonzept) ebenfalls zentral an einer Stelle, verteilt an mehreren Stellen oder auch in mehreren Kopien an verschiedenen Stellen vorliegen kann.

Verfahren und Anordnung gestalten sich am einfachsten, wenn das Prepaid-Guthaben des Geldsenders, das Zielkonto des Geldempfängers und die Prepaid-Shopping-Anwendung selbst bei ein und demselben Dienstbetreiber verwaltet bzw. betrieben werden. Ist dies nicht der Fall, muß ein (als solches bekanntes) Clearing über die Geldübertragung stattfinden. Für diesen Vorgang können die beim Ab- und Aufbuchungsvorgang erstellten Dokumentationen, insbesondere als sogenannte Log-Records, eingesetzt werden.

Das vorgeschlagene Verfahren bietet als Echtzeitverfahren eine gegenüber bekannten Zahlungsabwicklungsverfahren verbesserte Transparenz und Zuverlässigkeit und ist insbesondere auch von Personen nutzbar, denen kein Kreditrahmen gewährt wird. Der Nutzer muß lediglich über ein vorausbezahltes Guthaben verfügen, das eine für die vorgesehene Geldübertragung ausreichende Deckung gewährleistet.

Das vorgeschlagene System erbringt zudem den wesentlichen Vorteil, daß das auf einem Prepaidkonto vorhandene elektronische Geld nicht nur für die Bezahlung einer eng spezifizierten Dienstleistung (speziell von Telefongesprächen), sondern in vielfältiger Weise für die Bezahlung von Waren, Dienstleistungen, Informationen etc. in realen wie auch in virtuellen Verkaufseinrichtungen aller Art genutzt werden kann. Über die Vorausbezahlung des Guthabens hat der Nutzer eine strenge Kostenkontrolle, und eine unbeabsichtigte Verschuldung ist prinzipiell ausgeschlossen. Damit ist dieses Verfahren besonders vorteilhaft auch für Minderjährige (oder auch für nicht mehr im vollem Besitz ihrer geistigen Kräfte befindliche ältere Menschen) einsetzbar, für die es bislang keine vergleichbare Anwendung gibt. Für den Geldempfänger sind für die Bezahlung von Waren oder Dienstleistungen verschiedener Anbieter nicht länger mehrere Prepaid-Karten oder -Endgeräte erforderlich, sondern nur die Speicherung einer einzigen Prepaid-Rufnummer.

Vorteile und Zweckmäßigkeiten der Erfindung ergeben sich im übrigen aus den Unteransprüchen sowie der nachfolgenden Beschreibung eines bevorzugten Ausführungsbeispiels anhand der Figuren. Von diesen zeigen:
Figur 1 ein stark vereinfachtes Funktions-Blockschaltbild einer ersten Ausführungsform der erfindungsgemäßen Anordnung,
Figur 2 ein stark vereinfachtes Funktions-Blockschaltbild einer zweiten Ausführungsform,
Figur 3 ein stark vereinfachtes Funktions-Blockschaltbild einer dritten Ausführungsform und

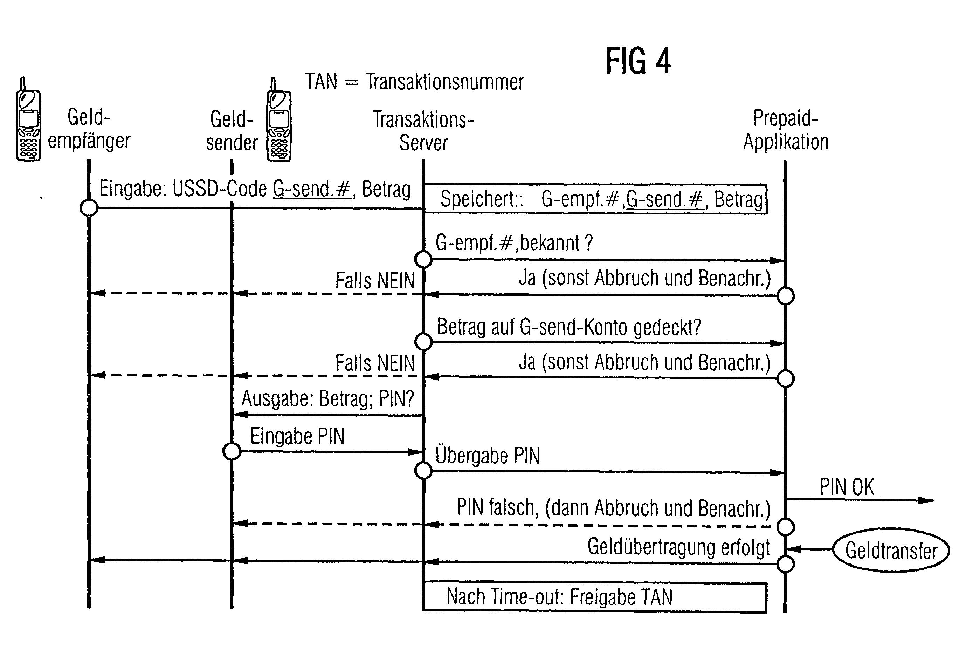

Figur 4 eine schematische Darstellung wesentlicher Schritte der vorgeschlagenen Anwendung bei der Anordnung nach Fig. 1.

Die Figuren sind aufgrund ihrer Beschriftung im wesentlichen selbsterklärend, so daß nachfolgend keine detaillierte Figurenbeschreibung gegeben wird.

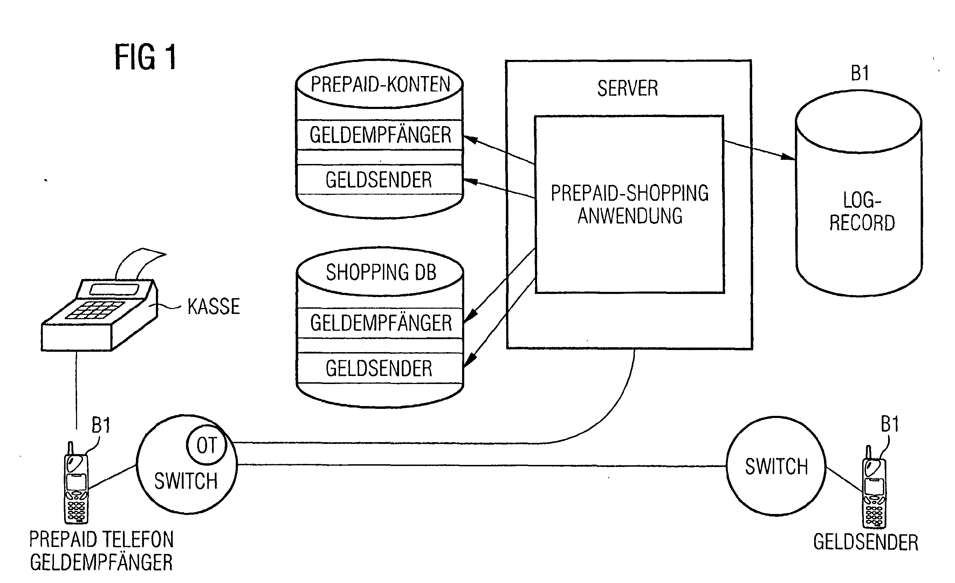

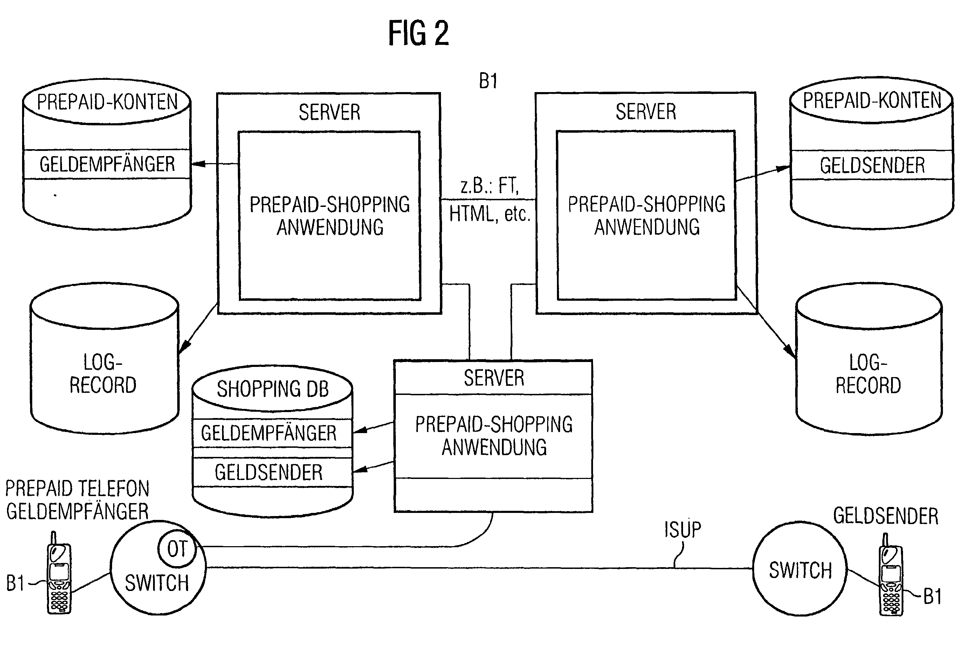

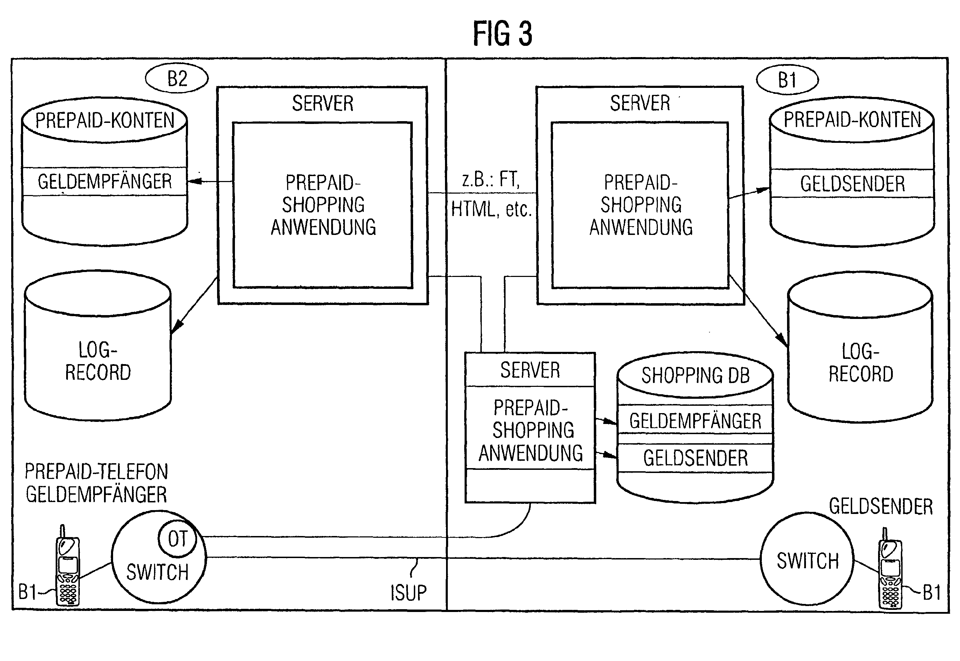

Es wird darauf hingewiesen, daß in Fig. 1 davon ausgegangen wird, daß die Prepaid-Shopping-Anwendung auf demselben Server läuft, auf dem auch Prepaid-Konten des Geldempfängers und Geldsenders geführt werden. In Fig. 2 ist dagegen der Fall dargestellt, daß Prepaid-Konten des Geldsenders und Geldempfängers auf einem anderen Server (desselben Betreibers B1) als demjenigen verwaltet werden auf dem die Prepaid-Shopping-Anwendung läuft. Fig. 3 zeigt den Fall, daß die Prepaid-Shopping-Anwendung und durch diese gehandhabte Prepaid-Konten auf unterschiedlichen Servern verschiedener Betreiber B1, B2 verwaltet werden. In den Figuren 1 bis 3 ist der Fall dargestellt, daß der Transaktions-Server vom Endgerät des Geldempfängers angerufen wird, das durch eine Kasseneinrichtung angesteuert wird. Modifiziert man die Figuren durch Ersetzung der Verbindung zwischen dem Switch des Geldempfängers und dem Server durch eine Verbindung zwischen dem Switch des Geldsenders und dem Server, zeigen sie den Fall eines Anrufes beim Transaktions-Server durch den Geldsender.

Der Geldübertragungsvorgang wird durch Absendung eines USSD-String der weiter oben angegebenen Art durch das Endgerät des Geldempfängers oder Geldsenders eingeleitet, wobei der den Geldbetrag spezifizierende Teil des Datenstrings durch die mit dem Endgerät verbundene Kasseneinrichtung geliefert wird. Sofern die Eingabe des Preises nicht im Zusammenhang mit dem Signalisierungsvorgang erfolgt ist, legt die Prepaid-Shopping-Anwendung eine Ansage an, mit der der Anrufende zur Eingabe des Preises aufgefordert wird. Daraufhin gibt der Anrufer dann den Preis ein.

Die durch den USSD-String aktivierte Prepaid-Shopping-Anwendung auf dem Transaktions-Server übergibt nun die für die Geldübertragung erforderlichen Daten (insbesondere die Rufnummern von Geldempfänger und Geldsender und den Geldbetrag) an eine Prepaid-Anwendung auf einem entsprechenden Server. Dies kann der Transaktions-Server selbst (Fig. 1) oder mindestens ein Server desselben Betreibers (Fig. 2) oder mindestens ein Server eines anderen Betreibers (Fig. 3) sein. Die Anwendungen können auch verteilt in Bausteinen auf verschiedenen Servern ablaufen.

Nach der Übermittlung der Daten, mit der das Geldübertragungsverfahren gestartet ist, folgt zunächst ein Prüfungsvorgang im Hinblick darauf, ob der Datenträger gültig und der Betrag auf dem Prepaid-Konto des Geldsenders für den vorgesehenen Übertragungsvorgang ausreichend ist. Ist beides der Fall, wird der Geldsender aufgefordert, die Abbuchung des zu übertragenden Geldbetrages durch Eingabe seiner PIN zu autorisieren.

Im Rahmen des Prüfungsvorganges greift die Prepaid-Shopping-Anwendung auf die Shopping-Datenbank zu und liest den Geldempfänger-Datensatz und den Geldsender-Datensatz mit den darin enthaltenden Informationen, auf welchem Server bzw. welchen Servern (und bei welchem Betreiber bzw. welchen Betreibern) sich die Konten des Geldempfängers und Geldsenders befinden. Der Server des Geldsenders wird identifiziert, und es wird, falls es sich um einen anderen Server handelt als denjenigen, auf dem die Prepaid-Shopping-Anwendung läuft, eine Echtzeitverbindung zu einer auf diesem fremden Server laufenden Prepaid-Shopping-Anwendung aufgebaut.

An die Prepaid-Shopping-Anwendung auf dem Server des Geldsenders wird eine Aufforderung zur Prüfung übermittelt, ob das elektronische Guthaben auf dem Prepaid-Konto des Geldsenders für die vorgesehene Geldübertragung ausreicht. Ist dies nicht der Fall, wird die Übertragung mit einem entsprechenden Hinweissignal an das Endgerät des Geldempfängers und/oder Geldsenders abgebrochen. Ist der zu übertragende Geldbetrag gedeckt, wird er auf dem Prepaid-Konto des Geldsenders reserviert.

Anschließend erfolgt die erwähnte Autorisierung per Eingabe der PIN durch den Geldsender an der Kasse des Geldempfängers. Die eingegebene PIN wird mit der im Geldsender-Datensatz hinterlegten PIN verglichen. Ist sie gültig, wird der Abbuchungsvorgang eingeleitet. Ist sie ungültig, wird die Transaktion an dieser Stelle abgebrochen und wiederum ein entsprechendes Hinweissignal übermittelt.

Es folgt die Abbuchung des zu übertragenden Geldbetrages vom Prepaid-Konto des Geldsenders. Dieser Vorgang ist zeitkritisch und erfolgt in Echtzeit. Befindet sich das Prepaid-Konto des Geldsenders auf dem gleichen Server wie die Prepaid-Shopping-Applikation, kann das Guthaben sofort (in Echtzeit) um den zu übertragenden Geldbetrag reduziert werden. Befindet sich das Konto auf einem fremden Server, muß die Abbuchungsanforderung an die dortige Prepaid-Shopping-Anwendung gestellt werden, und die Abbuchung erfolgt unter deren Regime. In jedem Falle wird über den Abbuchungsvorgang ein Log-Record erstellt und der Geldempfänger über das Kassensystem oder einen Anruf oder per SMS o. ä. über die Ausführung der Abbuchung informiert.

Es folgt die Aufbuchung des zu übertragenden Geldbetrages auf das Konto des Geldempfängers, bei dem es sich um ein Prepaid-Konto, ein Realtime-Account oder ein normales Bank-Girokonto handeln kann. Dieser Vorgang ist nicht zeitkritisch, muß aber mit höchster Zuverlässigkeit erfolgen. Auch hierbei sind die oben für das Abbuchen erwähnten Varianten zu unterscheiden - je nachdem, ob das Konto auf einem fremden Server geführt wird oder nicht. Auch für den Aufbuchungsvorgang wird ein Log-Record erstellt.

Die Ausführung der Erfindung ist nicht auf die erwähnten Beispiele, Varianten und Aspekte beschränkt, sondern im Rahmen der Ansprüche ebenso in einer Vielzahl von Abwandlungen möglich, die im Rahmen fachgemäßen Handelns liegen. Insbesondere sind die oben beschriebenen Verfahrensschritte auch in anderer Reihenfolge möglich.

Spezielle Vorteile des als Ausführungsbeispiel beschriebenen Vorgehens unter Nutzung eines USSD-String bestehen darin, daß der Geldsender anonym bleiben kann und keine langen Rufnummern zwischen Geldsender, Geldempfänger und Transaktions-Server ausgetauscht werden müssen, sondern lediglich einmalig ein Datenstring ausgegeben werden muß. Das erfolgt zudem im wesentlichen selbsttätig durch das Kassensystem des Geldempfängers. Damit wird die Dauer des Transaktionsvorganges verkürzt und die Fehlerrate bei der Eingabe verringert. Der Geldempfänger bzw. Geldsender muß bei jeder Transaktion nur einmal den Transaktions-Server anrufen und den Geldbetrag eingeben und gewinnt Zeit für andere Tätigkeiten. Die Eingaben per USSD können zudem an jedem heute gebräuchlichen Endgerät erfolgen.

## Patentansprüche

1. Verfahren zur Übertragung eines elektronischen Geldbetrages aus einem Guthabenspeicher eines Geldsenders, der insbesondere ein vorausbezahltes Guthaben aufweist, auf ein Konto bzw. in einen Guthabenspeicher eines Geldempfängers über ein intelligentes Netz, insbesondere Mobilfunknetz, in Echtzeit, mit den Schritten:
- Speicherung eines Geldempfänger-Datensatzes, der mindestens eine Rufnummer eines Endgerätes des Geldempfängers im Telekommunikationsnetz und einen Konto-Identifikator des Kontos bzw. Guthabenspeichers des Geldempfängers umfaßt, in einer Transaktions-Datenbasis und/oder einer Guthabenverwaltungs-Datenbasis, wobei mindestens die Rufnummer in der Transaktions-Datenbasis gespeichert wird, insbesondere im Rahmen einer Subskription eines Geldübertragungs-Dienstes durch den Geldempfänger bei einem Dienstbetreiber,
- Speicherung eines Geldsender-Datensatzes, der mindestens eine Rufnummer eines Endgerätes, einen Konto-Identifikator des Guthabenspeichers und einen Authentisierungsdatensatz des Geldsenders umfaßt, in der Transaktions-Datenbasis und/oder einer Guthabenverwaltungs-Datenbasis,
- Aufbau einer Verbindung zwischen dem Endgerät des Geldempfängers oder Geldsenders und einem Transaktions-Server des Dienstbetreibers unter Nutzung eines den Geldübertragungs-Dienst spezifizierenden Nutzer-an-Dienst-Signalisierungsdatenstrings,
- Eingabe des zu übertragenden Geldbetrages und einer Spezifikation des jeweiligen Partners der Geldübertragung am Endgerät des Geldempfängers oder Geldsenders und Übermittlung an den Transaktions-Server,
- Auslesen aus der Transaktions-Datenbasis und Auswertung des Geldempfänger-Datensatzes und wahlweise des Geldsender-Datensatzes durch den Transaktions-Server, einschließlich Herstellung optional erforderlicher Datenverbindung(en) zu einer oder mehreren externen Anwendung(en),
- Prüfung der Deckung des Geldbetrages im Geldsender-Guthabenspeicher und Reservierung des Geldbetrages im Deckungsfall bzw. Abbruch mit Signalisierung im Unterdeckungsfall,
- Abbuchung des Geldbetrages aus dem Geldsender-Guthabenspeicher und Dokumentation derselben,
- Aufbuchung des Geldbetrages auf das Geldempfänger-Konto bzw. den Geldempfänger-Guthabenspeicher und Dokumentation derselben,
- Übermittlung einer Information über die Ab- und/oder die Aufbuchung an das Endgerät des Geldempfängers und/oder Geldsenders.

2. Verfahren nach Anspruch 1,
**dadurch gekennzeichnet, daß**
der zu übertragende Geldbetrag im Signalisierungsdatenstring kodiert ist.

3. Verfahren nach Anspruch 1 oder 2,
**dadurch gekennzeichnet, daß**
der Signalisierungsdatenstring ein USSD-Datenstring eines Mobilfunknetzes, insbesondere nach dem GSM- oder UMTS-Standard, ist und aufgrund eines MAP-Protokolls unter Zugriff auf eine Heimatdatei an den Transaktions-Server übertragen wird.

4. Verfahren nach einem der vorangehenden Ansprüche,
**dadurch gekennzeichnet, daß**
in einem vom Geldsender ausgesandten Signalisierungsdatenstring die in der Transaktions-Datenbasis gespeicherte Rufnummer des Geldempfängers und in einem vom Geldempfänger ausgehenden Signalisierungsdatenstring die in der Transaktions-Datenbasis gespeicherte Rufnummer des Geldsenders kodiert ist.

5. Verfahren nach einem der vorangehenden Ansprüche,
**dadurch gekennzeichnet, daß**
der Authentisierungsdatensatz im Geldsender-Datensatz einen Authentisierungscode oder biometrische Daten des Geldsenders umfaßt und vor dem Schritt der Abbuchung Schritte zur Autorisierung derselben ausgeführt werden, nämlich die Schritte:
- Eingabe des Authentisierungscodes oder der biometrischen Daten durch den Geldsender an seinem Endgerät,
- Übermittlung derselben zum Transaktions-Server und
- Vergleich der übermittelten mit den im Geldsender-Datensatz vorliegenden Daten und Ausgabe eines Abbuchungs-Freigabesignals bei Übereinstimmung bzw. eines Abbuchungs-Sperrsignals bei Nichtübereinstimmung.

6. Verfahren nach Anspruch 5,
**dadurch gekennzeichnet, daß**
die Schritte zur Autorisierung bei einem einen vorbestimmten Schwellwert übersteigenden Geldbetrag ausgeführt werden, welcher insbesondere durch den Dienstbetreiber oder den Geldsender einstellbar ist.

7. Verfahren nach Anspruch 5 oder 6,
**dadurch gekennzeichnet, daß**
die Eingabe des Authentisierungscodes oder der biometrischen Daten im Rahmen der primär aufgebauten Verbindung zwischen dem Endgerät des Geldempfängers oder Geldsenders und dem Transaktions-Server vorgenommen wird.

8. Verfahren nach Anspruch 5 oder 6,
**dadurch gekennzeichnet, daß**
die Eingabe des Authentisierungscodes oder der biometrischen Daten im Rahmen einer sekundär aufgebauten Verbindung zwischen dem Transaktions-Server und dem Endgerät des Geldsenders, insbesondere aufgrund einer vom Transaktions-Server übermittelten Aufforderung, vorgenommen wird.

9. Verfahren nach Anspruch 8,
**dadurch gekennzeichnet, daß**
die vom Transaktions-Server ausgehende Aufforderung als Sprachnachricht oder Textnachricht, insbesondere im SMS-Format, oder als WAP-Push-Seite ausgegeben wird.

10. Verfahren nach einem der vorangehenden Ansprüche,
**gekennzeichnet durch**
die Ausführung unter Herstellung einer Datenverbindung zu mindestens einem externen Server, auf dem der Geldsender-Guthabenspeicher und/oder das Geldempfänger-Konto bzw. der Geldempfänger-Guthabenspeicher verwaltet werden, wobei der Konto-Identifikator des Geldempfänger-Datensatzes und/oder der Konto-Identifikator des Geldsender-Datensatzes eine Serveradresse oder -rufnummer umfaßt und der Transaktions-Server sich mit dieser bzw. diesen nach dem Schritt des Auslesens des Geldempfänger-Datensatzes und des Geldsender-Datensatzes zur Ausführung der nachfolgenden Schritte verbindet.

11. Verfahren nach einem der vorangehenden Ansprüche,
**dadurch gekennzeichnet, daß**
die Subskription des Geldempfängers beim Dienstbetreiber mit einer Mehrzahl von Konten und/oder Rufnummern erfolgt, wobei insbesondere die Anzahl der Konten kleiner als die der Rufnummern ist, und wobei alle entsprechenden Konto-Identifikatoren und die Rufnummern im Geldempfänger-Datensatz gespeichert werden.

12. Anordnung zur Übertragung eines elektronischen Geldbetrages aus einem Guthabenspeicher eines Geldsenders, der insbesondere ein vorausbezahltes Guthaben aufweist, auf ein Konto bzw. in einen Guthabenspeicher eines Geldempfängers über ein intelligentes Netz in Echtzeit, insbesondere zur Durchführung des Verfahrens nach einem der vorangehenden Ansprüche, welche aufweist:
- mindestens einen Kontoführungs-Server mit einem Geldsender-Guthabenspeicher und einem Geldempfänger-Konto- bzw. -Guthabenspeicher,
- ein an das Telekommunikations- und Datennetz angeschlossenes Endgerät des Geldempfängers und/oder
- ein an das Telekommunikations- und Datennetz angeschlossenes Endgerät des Geldsenders,
- eine Transaktions-Datenbasis eines Dienstbetreibers, in der ein Geldempfänger-Datensatz, der die Transaktions-Rufnummer des Endgerätes des Geldempfängers und/oder einen Konto-Iden-tifikator des Kontos bzw. Guthabenspeichers umfaßt, und ein Geldsender-Datensatz gespeichert sind, der die Rufnummer eines Endgerätes des Geldsenders und/oder einen Konto-Identifikator des Guthabenspeichers und wahlweise einen Authentisierungsdatensatz umfaßt, und
- einen Transaktions-Server, der mit der Transaktions-Datenbasis verbunden und über ein Signalisierungsdatenprotokoll mit dem Endgerät des Geldsenders oder Geldempfängers sowie über eine Datenverbindung mit dem Kontoführungs-Server oder den Kontoführungs-Servern verbindbar oder mit letzterem bzw. letzteren integral ausgeführt ist,
zum Auslesen und zur Auswertung des Geldempfänger-Datensatzes und des Geldsender-Datensatzes aus der Transaktions-Datenbasis bzw. vom Kontoführungs-Server oder den Kontoführungs-Servern sowie zur Herstellung optional erforderlicher Datenverbindung(en) zu einer oder mehreren externen Anwendung(en) und zur Steuerung einer Deckungsprüfung im Geldsender-Guthabenspeicher sowie einer Abbuchung von diesem und einer Aufbuchung auf das Geldempfänger-Konto bzw. den Geldempfänger-Guthabenspeicher.

13. Anordnung nach Anspruch 12,
**dadurch gekennzeichnet, daß**
das intelligente Netz als Mobilfunknetz ausgebildet ist oder ein solches umfaßt, wobei das Endgerät des Geldsenders und/oder das Endgerät des Geldempfängers als Mobilfunk-Endgerät ausgebildet sind, dem Transaktions-Server ein Mobilfunk-Endgerät zugeordnet ist und das Signalisierungsdatenprotokoll als MAP-Protokoll implementiert ist.

14. Anordnung nach Anspruch 12 oder 13,
**dadurch gekennzeichnet, daß**
die Transaktions-Datenbasis und der Geldsender-Guthabenspeicher und/oder der Geldempfänger-Guthabenspeicher auf dem Transaktions-Server implementiert sind.

15. Anordnung nach einem der Ansprüche 12 bis 14,
**dadurch gekennzeichnet, daß**
der Transaktions-Server Mittel zur Dokumentierung eines Abbuchungsvorganges und eines Aufbuchungsvorganges, insbesondere als Log-Record, aufweist.

16. Anordnung nach einem der Ansprüche 12 bis 15,
**dadurch gekennzeichnet, daß**
dem Transaktions-Server Telekommunikationsmittel zur Signalisierung eines Transaktionsabbruches oder einer Abbuchung und/oder einer Aufbuchung an das Endgerät des Geldsenders zugeordnet sind.

17. Anordnung nach einem der Ansprüche 12 bis 16,
**dadurch gekennzeichnet, daß**
mit dem Endgerät des Geldempfängers eine Kasseneinrichtung verbunden ist, über die insbesondere selbsttätig ein den zu übertragenden Geldbetrag spezifizierender Abschnitt des Signalisierungsdatenstrings erzeugt wird.

18. Anordnung nach Anspruch 17,
**dadurch gekennzeichnet, daß**
die Kasseneinrichtung Mittel zur Eingabe eines Authentisierungscodes bzw. von biometrischen Daten durch den Geldsender aufweist.
